# EUROPÄISCHE PATENTSCHRIFT

(11) **EP 0 396 212 B1**
(45) Veröffentlichungstag und Bekanntmachung des Hinweises auf die Patenterteilung: **18.09.1996**
(21) Anmeldenummer: 90250090.9
(22) Anmeldetag: 04.04.1990
(51) Int. Cl.: G01N 3/10, G01N 3/08, G01N 3/04, G01N 3/00

(54) **Vorrichtung und Verfahren zur einachsigen mechanischen Werkstoffprüfung**
Apparatus and procedure for the uniaxial mechanical testing of materials
Dispositif et procédé pour l'essai mécanique uniaxe de métaux

(30) Priorität: 10.04.1989 DE 3912075
(43) Veröffentlichungstag der Anmeldung: 07.11.1990
(73) Patentinhaber: BUNDESANSTALT FÜR MATERIALFORSCHUNG UND -PRUFUNG (BAM), D-12205 Berlin (DE)
(72) Erfinder: Markowski, Winfried, Dipl.-Ing., D-1000 Berlin 33 (DE)
(74) Vertreter: Christiansen, Henning, Dipl.-Ing.

(56) Entgegenhaltungen:
- EP-A- 0 296 423
- DE-A- 2 219 744
- DE-A- 2 239 554
- DE-C- 3 522 453
- MATERIALPRÜFUNG, Bd. 12, Nr. 1, Januar 1970, Düsseldord, DE, Seiten 1-6; H. KREISKORTE et al.: "Die Simulation einer "harten" Werkstoffprüfmaschine zur Lösung einiger Probleme bei Festigkeitsuntersuchungen"
- TECHNISCHE MITTEILUNGEN KRUPP, Bd. 24, 1966, Seiten 79-88; J. BURBACH : "Eine Zerreissmaschine mit besonders grosser Federkonstante"

## Beschreibung

Die Erfindung betrifft eine Prüfmaschine der im Oberbegriff des Anspruchs 1 angegebenen Art sowie ein Verfahren für die mechanische Prüfung von Werkstoffproben.

In dem Handbuch der Werkstoffprüfung, Hrsg. E. Siebel und N. Ludwig, Springerverlag 1985, Bd. 1, Seite 15-17 und 54-55 wird eine Prüfmaschine beschrieben, die den Zusammenhang zwischen Belastung und Verformung oder Spannung und Dehnung einer Werkstoffprobe ermitteln soll. Das setzt versuchstechnisch die Verwendung einer als Bewegungs- bzw. Verformungsquelle wirkenden Prüfmaschine für die Vorgabe definierter Verformung als unabhängige Größe und die Messsung der dabei auftretenden Kraft als abhängige Größe voraus. Dabei darf der Prüfvorgang im Bereich des abnehmenden Verformungswiderstandes einer Probe, insbesondere bei plötzlichen Änderungen desselben, nicht instabil werden und damit außer Kontrolle geraten.

Aus der Zeitschrift "Materialprüfung", Jahrgang 12 (1970), Nr. 1, Seite 1 bis 6, ist weiterhin bekannt, daß zur Erfüllung dieser Erfordernisse Prüfmaschinen verwendet werden, die mit Regeleinrichtungen für verformungsgeregelten Prüfbetrieb ausgestattet sind. Außerdem ist die Verwendung eines elastischen Kraftnebenschlusses zur Probe mit dem Ziel, die wirksame Federkonstante der Prüfmaschine zu erhöhen, aus der "Technischen Mitteilung der Krupp Forschungsberichte", Band 24, 1966, H. 3, S. 79-88, bekannt. Bei den verformungsgeregelten Prüfmaschinen erfolgt die Steuerung des Prüfmaschinenantriebs in einem geschlossenen Regelkreis so, daß entweder die Bewegung des Antriebs oder der Maschinentraverse oder die mit einem Dehnungsaufnehmer an der Probe aufgenommene Dehnung einem vorgegebenen Sollwert nachgeführt und die dazu von der Prüfmaschine aufgebrachte Kraft gemessen wird.

Dabei wirkt allerdings die verformungsgeregelte Prüfmaschine nur als indirekte oder nachgebildete Bewegungs-bzw. Verformungsquelle, die dementsprechend auch nur eine indirekte Verformungsvorgabe gestattet. Die Prüfmaschine stellt dabei mit der Summe ihrer Nachgiebigkeiten einschließlich ihres Antriebssystems prinzipiell eine in Reihe mit der Probe liegende Feder und damit zumindest für kleine Verformungswege eine direkte mechanische Kraftquelle dar.

Daraus ergeben sich folgende Nachteile:

Bei kleinen spontanen Änderungen der Probennachgiebigkeit während des Prüfvorgangs, wie sie etwa beim Durchlaufen des Streckgrenzenübergangs von Stahlproben oder beim Auftreten von Mikrorissen in Betonproben vorkommen, wird die Probe durch die im elastischen Ausgleich zurückfedernde Prüfmaschine um die entsprechenden Beträge in Kraftrichtung ungünstig weiterverformt. Dies geschieht spontan und unabhängig von der Steuerung des Prüfmaschinenantriebs und ist daher unkontrollierbar. Der schlagartige Verlauf solcher Erscheinungen löst im Gefüge der Probe meist eine Reihe weiterer Mikrovorgänge gleicher Art aus bis wieder Gleichgewicht der Federkräfte von Probe und Prüfmaschine erreicht wird. Das bedeutet aber unbeabsichtigte Gefügeschädigungen in der Probe mit streuend verfälschendem Einfluß auf das Ergebnis der durchgeführten Prüfung.

Die herkömmliche, bekannte Prüfmaschine ist durch die indirekte Verformungsvorgabe prinzipiell nicht geeignet, Ausgleichsvorgänge zwischen Probe und Prüfmaschine, wie schon erwähnt, regelungstechnisch zu verhindern. Die bekannte Prüfmaschine bewirkt gerade durch die Regelfunktion fehlerhafte Prüfergebnisse als zusätzliche Nachteile: Der Regelkreis kann nämlich kausal bedingt nur auf bereits eingetretene Abweichungen vom Sollwert, also überhaupt erst nach Ablauf eines solchen schlagartigen Ausgleichsvorgangs zwischen Probe und Prüfmaschine, reagieren und erst nachträglich die Verformungsabweichung über den Prüfmaschinenantrieb als Stellglied korrigieren.

Diese regelungsbedingte Verformungsrückstellung bewirkt aber wegen des im allgemeinen unterschiedlichen Kraftverlaufs bei Zu- und Abnahme der Verformung im plastischen Bereich erhebliche Fehler des Prüfergebnisses. Für den Streckgrenzenübergang bei Stahlproben ergibt sich daraus z.B. eine grobe Verfälschung des unteren Streckgrenzenwertes, weil nach erfolgtem Dehnungssprung infolge Prüfmaschinenrückfederung dieser Dehnungsbetrag als Korrektur der Probendehnung über den Prüfmaschinenantrieb nachträglich zurückgeregelt wird, wobei die Kraft im Gegensatz zu ihrem relativ flachen Verlauf bei Dehnungszunahme in diesem Bereich viel steiler, nämlich längs einer Parallelen zur elastischen Linie der Probe, abnimmt. Dadurch erscheint der Wert für die untere Streckgrenze wesentlich zu niedrig.

Bei Vorgabe gleichmäßiger Antriebs- oder Traversengeschwindigkeit der Prüfmaschine wird keine entsprechend gleichmäßige Probenverformungsgeschwindigkeit erreicht, da sich mit nachlassendem Verformungswiderstand der Probe das Nachgiebigkeitsverhältnis in der Reihenschaltung Prüfmaschine-Probe ändert und damit die anteiligen Verformungsbeträge. Die Probe erhält dadurch im plastischen Bereich bei etwa gleichbleibender Kraft die gesamte Antriebsbewegung als Verformung und erfährt bei abnehmender Kraft den entsprechenden Rückfederungsweg der Prüfmaschine als zusätzliche Verformung. Damit nimmt die Verformungsgeschwindigkeit der Probe z.B. während eines Zugversuchs trotz gleichmäßiger Antriebsgeschwindigkeit der Prüfmaschine unkontrolliert bis zum Bruch zu.

Durch die Reihenschaltung von Probe und Prüfmaschine ändert sich zwangsläufig die Kraft in der Prüfmaschine mit der Probenkraft, was bei nie auszuschließenden Unsymmetrien bezüglich Montagefugen und Abmessungen im Aufbau der Prüfmaschine zu kraftabhängigen Deformationsunsymmetrien, also zu Schiefstellungen führt. Ebenso zwangsläufig kommt es beim Probenbruch zu einer totalen Entlastung und der damit verbundenen Rückfederung der Prüfmaschine, was insbesondere bei spröden Werkstoffen schlagartig erfolgt. Dadurch treten im Lauf der Zeit unvermeidlich Lockerungen und Verschleißerscheinungen in Verbindungsstellen und Fugen des Prüfmaschinensystems auf, die zu Störungen wie z.B. kraftabhängige Schiefstellungen und dadurch bedingte Prüffehler, wie schlechte Reproduzierbarkeit, überlagerte Biegemomente und Störungen im Antriebssystem führen können.

Die bekannten Prüfmaschinen sind aufwendig und teuer. Bei diesen Maschinen wurde versucht, durch möglichst steife Maschinenkonstruktionen, schnelle, empfindlich reagierende Antriebe und aufwendige Regeleinrichtungen die vorstehend geschilderten Nachteile zu minimieren, ohne sie jedoch wegen ihrer prinzipiellen Natur ganz vermeiden zu können.

Die aus der DE-PS 35 22 453 C2 und den "Technischen Mitteilungen der Krupp Forschungsberichte", 1966, H3 bekannten, nicht verstellbaren elastischen Kraftnebenschlußanordnungen zur Probe haben weiterhin den gemeinsamen Nach teil, daß sie nur zusammen mit der Probe beansprucht werden können und dabei ausschließlich im Bereich elastischer Deformation der parallel zur Probe angeordneten Federelemente durch Änderung der Prüfmaschinenkraft eine geringe Probenverformung zulassen. Diesen Anordnungen fehlt die entscheidende Eigenschaft der einstellbaren Wegquelle zur Vorgabe definierter kraftunabhängiger Verformungen sowie die prinzipielle Ausschaltung der Einflüsse aus der Prüfmaschinenverformung.

Der Erfindung liegt die Aufgabe zugrunde, eine Prüfvorrichtung zu schaffen, die als direkte Bewegungs- bzw. Verformungsquelle wirkt, ebenso ein Prüfverfahren mit direkter Verformungsvorgabe zu ermöglichen, das die geschilderten Nachteile des Einflusses der Prüfmaschinennachgiebigkeit und des über den Antrieb geschlossenen Regelkreises prinzipiell und mit wesentlich geringerem Aufwand vermeidet.

Diese Aufgabe wird mit den kennzeichenden Merkmalen des Anspruchs 1 gelöst. Ein entsprechendes Prüfverfahren wird mit den kennzeichnenden Merkmalen des Anspruchs 14 offenbart.

Die mit der Erfindung erzielbaren Vorteile bestehen insbesondere darin, daß mit der ersten Kraftangriffsvorrichtung eine einen steifen Kraftnebenschluß bildende Vorrichtung in Verbindung mit einer Längenverstellvorrichtung angeordnet ist. Die Kraftnebenschlußvorrichtung überträgt dabei eine von der einen Kraftangriffsvorrichtung auf die andere Kraftangriffsvorrichtung wirkende, die in den beiden Probeneinspannvorrichtungen befindliche Probe überbrückende Vorspannkraft. Zwischen der ersten Probeneinspannvorrichtung einerseits und der Kraftnebenschlußvorrichtung zusammen mit der ersten Kraftangriffsvorrichtung andererseits ist die erste Kraftmeßvorrichtung vorgesehen. Die zweite Probeneinspannvorrichtung ist mit einer Längenverstellvorrichtung in bezug auf das nicht mit einer Kraftangriffsvorrichtung verbundene Ende der Kraftnebenschlußvorrichtung in Richtung der Kraftwirkung verbindlich gelagert. In diesem Bereich ist auch die Längenverstelleinrichtung mit der zweiten Kraftangriffsvorrichtung verbunden. Weiter ist die zweite Kraftangriffsvorrichtung mit der Antriebsvorrichtung zur Krafterzeugung verbunden. An der Antriebsvorrichtung ist dabei eine Vorrichtung zur Vorgabe einer Vorspannkraft während des Prüfvorgangs vorgesehen.

Diese Anordnung stellt in vorteilhafter Weise eine einstellbare Bewegungsquelle als Längenverstellvorrichtung zur Vorgabe definierter Verformungswege dar. Durch die vorgegebene konstante Vorspannung der Prüfmaschine wird der Einfluß der Prüfmaschinenverformung eliminiert. Die erste Kraftmeßvorrichtung nimmt dabei die direkt auf die Probe wirkende Prüfkraft auf.

Insbesondere sind folgende vorteilhafte Weiterbildungen günstig:

Eine zweite Kraftmeßvorrichtung als Teil der Vorrichtung zur Vorgabe einer Vorspannkraft ist an einer der Kraftangriffsvorrichtungen angeordnet. Dadurch kann die Vorspannkraft kontrolliert werden. Die Längenverstellvorrichtung ist als eine an der Kraftnebenschlußvorrichtung gelagert angeordnete Spindelmutter mit zugeordneter Spindel ausgebildet. Ein mit der Spindelmutter verbundener Stellmotor ist an der Kraftnebenschlußvorrichtung, die als rechteckiger Rahmen, Topf oder Käfig ausgebildet ist, vorgesehen. Die Spindelmutter und der zugeordnete Stellmotor ist für Zugversuche innerhalb bzw. für Druckversuche außerhalb des Rahmens, Topfes oder Käfigs der Kraftnebenschlußvorrichtung angeordnet. Diese Lösung erweist sich als besonders günstig, da ein geringer technischer Aufwand zur Verwirklichung nötig ist.

In einer weiteren Ausführung der Erfindung ist die Längenverstellvorrichtung als Hydrauliksystem ausgebildet, das den Kraftfluß in die Kraftnebenschlußvorrichtung überträgt. Die Verstellung erfolgt unter Last durch dosiertes Ändern des Flüssigkeitsvolumens im Zylinder durch ein dafür vorgesehenes Steuerventil. Damit ist in technisch einfacher Weise ohne besonderes Antriebsaggregat die Verformungsvorgabe auch in einem großen Geschwindigkeitsbereich möglich. Bei Verwendung eines Niederdruckspeichers zur Aufnahme der abgelassenen Flüsigkeitsmenge ist eine automatische Kolbenrückstellung des Zylinders der Längenverstellvorrichtung bei Entlastung der Prüfmaschine möglich. Eine weitere Möglichkeit, die auch Rückstellung der Längenverstellvorrichtung gegen die Prüfkraft und damit auch schwellend verlaufende Verformung der Probe ermöglicht, ist die einfache verbindung mit einem Zylinder, dessen Kolben etwa mit einer definiert verstellbaren Gewindespindel bewegt wird.

Um Prüfmaschinen bisheriger Bauart auf das neue Verfahren umrüsten zu können, sind die Kraftangriffsvorrichtungen im Querschnitt derart zylindrisch oder rechteckig ausgebildet, daß sie in die Probeneinspannvorrichtung einer herkömmlichen Prüfmaschine einspannbar sind. Dabei bilden diese Probeneinspannvorrichtungen die Kraftangriffsbereiche.

Gemäß einer weiteren vorteilhaften Weiterbildung, ist die Prüfmaschine derart gestaltet, daß die Probe zeitabhängigen Verformungen unterworfen wird, so daß die Prüfmaschine bei vielfältigen Untersuchungen einsetzbar ist.

In einer weiteren Ausgestaltung von besonderem Vorteil weist die Prüfmaschine ein parallel zur Kraftnebenschlußanordnung wirkendes weiteres Belastungssystem auf, das in Abhängigkeit vom Signal der Kraftmeßvorrichtung so gesteuert wird, daß es eine der Probenkraft gleiche Zusatzkraft auf die Kraftnebenschlußanordnung ausübt. Dadurch bleibt die Belastung und damit die Deformation der Kraftnebenschlußanordnung während des Prüfvorgangs konstant, so daß auch insoweit störende Einflüsse auf den Prüfvorgang ausgeschlossen werden. Die Steifigkeit der Kraftnebenschlußanordnung wird dadurch weiter gesteigert.

Als besonders vorteilhaft erweist sich folgender Prüfvorgang:
a) die Prüfmaschine wird über eine Kraftnebenschlußvorrichtung bei noch unbelasteter Probe nach der Anzeige der zweiten Kraftmeßvorrichtung, die die Maschinenkraft aufnimmt, auf einen Wert vorbelastet, der größer ist als eine zur Prüfung der Probe erforderliche Höchstkraft oder der einem während der Prüfung nicht zu überschreitenden Grenzwert entspricht, wobei der Einfluß der Prüfmaschinennachgiebigkeit vollständig eliminiert wird, weil die Vorbelastung der Prüfmaschine während des gesamten Prüfvorgangs konstant gehalten wird,
b) eine definierte direkte Verformung der Probe wird durch dosiertes Verstellen einer Längenverstellvorrichtung auf der Prüfkraftachse in einem in bezug auf die Vorbelastung der Prüfmaschine nachgebenden Richtungssinn ermöglicht, wobei sich der Kraftfluß je nach Verformungswiderstand der Probe zunehmend von der Kraftnebenschlußvorrichtung auf die Probe und die erste Kraftmeßeinrichtung verlagert, während die Antriebsvorrichtung, unter Konstanthaltung der Gesamtkraft, den als Verstellweg der Längenverstellvorrichtung vorgegebenen Verformungsweg der Probe automatisch nachstellt und so die erforderliche Verformungsenergie liefert,
c) bei Abnahme des Verformungswiderstandes der Probe wird der Kraftfluß entsprechend automatisch in die Kraftnebenschlußvorrichtung bis zur vollständigen Kraftübernahme beim Probenbruch zurückverlagert, wobei die Gesamtkraft der Antriebsvorrichtung auch weiterhin unverändert bleibt,
d) eine Entlastung der Prüfmaschine erfolgt erst nach abgeschlossenem Prüfvorgang.

Die mit der Erfindung erzielten Vorteile bestehen weiter insbesondere darin, daß die Prüfmaschine bezüglich der Probe als direkte Bewegungsquelle, d.h. als Energiequelle mit eingeprägter Bewegung, wirkt, die ein Prüfverfahren mit direkter Verformungsvorgabe und einstellbarer Kraftbegrenzung gestattet, bei dem die Nachgiebigkeit der Prüfmaschine keinen Einfluß mehr auf den Prüfvorgang hat. Daraus ergeben sich im einzelnen weiterhin folgende Vorteile:

Die spontanen Veränderungen der Probennachgiebigkeit wie z.B. beim Streckgrenzenübergang von Stahl bewirken keinen Verformungsausgleich sondern nur eine Änderung der Kraftverteilung zwischen Probe und Kraftnebenschluß bei gleichbleibender Prüfmaschinenkraft. Dadurch unterbleiben auch schlagartige Ausgleichsrückfederungen der Prüfmaschine mit ihren schädlichen Auswirkungen auf das Gefüge der Probe und dadurch bedingte Verfälschungen der Prüfergebnisse. Der Kraftverlauf bei spontanen Nachgiebigkeitsänderungen der Probe kann somit störungsfrei erfaßt werden.

Eine Verformungsregelung über die Antriebsvorrichtung der Prüfmaschine und der damit zusammenhängende Fehlereinfluß durch die prinzipielle Nachträglichkeit bei spontanen Nachgiebigkeitssprüngen der Probe z.B. am Streckgrenzenübergang entfällt.

Vorgegebene Verformungsgeschwindigkeiten werden der Probe direkt und unabhängig von Änderungen ihres Verformungswiderstandes erteilt, weil Verformungsausgleichsvorgänge und damit auch unterschiedliche Verformungsgeschwindigkeitsverteilungen zwischen Probe und Prüfmaschine unterbleiben. Außerdem kann je nach Ausführung der Verstellvorrichtung als Verformungsvorgabeeinrichtung die Verformungsgeschwindigkeit ohne großen Aufwand in weiten Grenzen variiert werden. Schlagartige Verformungsverläufe sind bei der hydraulischen Version mit genügend großem Ventilquerschnitt und einer weichen Feder im Maschinenantrieb möglich.

Die Prüfmaschine bleibt während des gesamten Prüfvorganges unter konstanter Belastung, weil sich die Kraft lediglich zwischen Probe und Kraftnebenschluß unterschiedlich aufteilt. Es entfallen daher sämtliche von der Probenkraft abhängige Veränderungen bezüglich der Prüfmaschinendeformation und deren Symmetrie und damit alle daraus resultierenden Einflüsse auf die Probe z.B. Biegung. Ebenso unterbleibt die schlagartige Totalentlastung beim Probenbruch mit ihren schädlichen Auswirkungen auf die Prüfmaschine, weil der aus der Probe verschwindende Kraftfluß einfach wieder vom Kraftnebenschluß mit übernommen wird und die Prüfmaschine dann nach beendetem Versuch in einer für sie unschädlichen Weise entlastet werden kann.

An die Prüfmaschine selbst sind dann hinsichtlich ihrer herkömmlichen Bestandteile keine besonderen Anforderungen mehr bezüglich Steifigkeit, Antrieb und Regelgüte zu stellen, wodurch der Aufwand erheblich geringer wird.

Die Prüfmaschine kann erfindungsgemäß auch für eine Momentbelastung, also für eine Torsionsprüfung der Probe ausgebildet sein, da eine Momentbelastung lediglich eine Kraftbelastung bezogen auf einen Hebelarm darstellt. Dabei werden die bei beliebigen zeitabhängigen Verformungen in Zug- bzw. Druckrichtung der Werkstoffprobe durch die Prüfmaschinenanordnung erzielten Vorteile für die Torsionsverformung ebenso erreicht.

Die erste und zweite Kraftangriffsvorrichtung sind jeweils als Momentangriffsvorrichtung, die erste und zweite Kraftmeßvorrichtung jeweils als Momentmeßvorrichtung, die Antriebsvorrichtung zur Krafterzeugung als Antriebsvorrichtung zur Momenterzeugung, der Kraftnebenschluß als Momentnebenschluß, die Längenverstellvorrichtung als Winkelverstellvorrichtung ausgebildet. Die zweite Probeneinspannvorrichtung ist dabei durch die Winkelverstellvorrichtung in bezug auf das nicht mit der Momentangriffsvorrichtung verbundene Ende der Momentnebenschlußanordnung in Drehsinnrichtung der Momentwirkung drehbar gelagert.

Die Prüfmaschinenenanordnung stellt in vorteilhafter Weise auch bei diesem Ausführungsbeispiel eine einstellbare Bewegungsquelle als Drehverstellvorrichtung zur Vorgabe definierter Verformungswinkel dar. Auch bei dieser Ausbildung wirkt die Prüfmaschine als direkte Bewegungsquelle, d.h. Energiequelle mit eingprägter Bewegung, die ein Prüfverfahren mit unmittelbarer Verformungsvorgabe und einstellbarer Momentbegrenzung gestattet. Auch bei dieser Ausbildung der Prüfmaschine ist die Prüfmaschinennachgiebigkeit ohne Einfluß auf die Torsionsuntersuchungen.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
Figur 1 ein erstes Ausführungsbeispiel der Erfindung in Frontansicht,
Figur 2 ein zweites Ausführungsbeispiel der Erfindung in Frontansicht,
Figur 3 ein drittes Ausführungsbeispiel der Erfindung in Frontansicht,
Figur 4 ein viertes Ausführungsbeispiel der Erfindung in Frontansicht,
Figur 5 ein weiteres fünftes Ausführungsbeispiel der Erfindung in Frontansicht, sowie
Figur 6 ein weiteres sechstes Ausführungsbeispiel der Erfindung in Frontansicht.

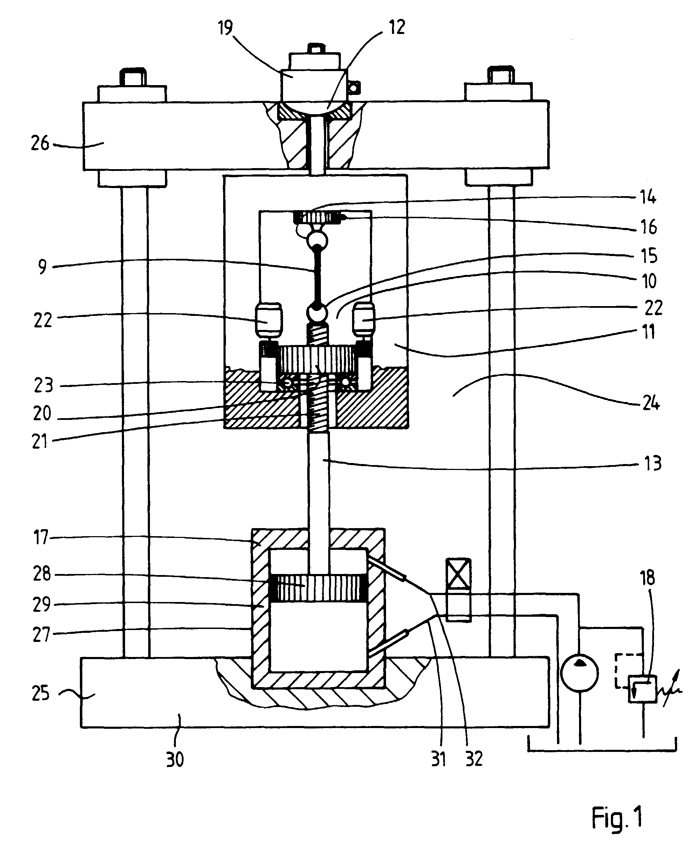

In Figur 1 ist eine hydraulische Zugprüfmaschine für Werkstoffproben 9 als erstes Ausführungsbeispiel der Erfindung dargestellt. Bei dieser Maschine wird die Kraft über eine mechanische Längenverstellvorrichtung 10 auf die Kraftnebenschlußvorrichtung 11, die als rechteckiger Rahmen ausgebildet ist, und die Probe verteilt. Die Prüfmaschine besteht dabei aus einer ersten und einer zweiten Kraftangriffsvorrichtung 12 und 13, einer ersten und einer zweiten Probeneinspannvorrichtung 14 und 15, einer ersten Kraftmeßvorrichtung 16 und einer Antriebsvorrichtung 17 zur Krafterzeugung. Die erste Kraftangriffsvorrichtung 12 ist an der Kraftnebenschlußvorrichtung 11 angeordnet. Die Kraftnebenschlußvorrichtung 11 überträgt dabei zunächst eine von der einen Kraftangriffsvorrichtung 12 bzw. 13 auf die andere Kraftangriffsvorrichtung 12 bzw. 13 wirkende, die in den beiden Probeneinspannvorrichtungen 14 und 15 befindliche Probe überbrückende Vorspannkraft. Zwischen der ersten Probeneinspannvorrichtung 14 einerseits und der Kraftnebenschlußvorrichtung 11 zusammen mit der ersten Kraftangriffsvorrichtung 12 andererseits ist die erste Kraftmeßvorrichtung 16 vorgesehen. Die zweite Probeneinspannvorrichtung 15 ist mit einer Längenverstellvorrichtung 10 in bezug auf den nicht mit einer Kraftangriffsvorrichtung 12 bzw. 13 verbundenen Ende der Kraftnebenschlußvorrichtung 11 in Richtung der Kraftwirkung verbindlich gelagert. In diesem Bereich ist auch die Längenverstellvorrichtung 10 mit der zweiten Kraftangriffsvorrichtung 13 verbunden. Weiter ist die zweite Kraftangriffsvorrichtung 13 mit der Antriebsvorrichtung 17 zur Krafterzeugung verbunden. An der Antriebsvorrichtung ist dabei - vorzugsweise eine vorspannbare Feder aufweisende - eine Vorrichtung 18 zur Vorgabe und zum konstant halten einer Vorspannkraft während des Prüfvorgangs vorgesehen. Eine zweite Kraftmeßvorrichtung 19 ist als Teil der Vorrichtung 18 zum Konstanthalten der Vorspannkraft an der ersten Kraftangriffsvorrichtungen 12 angeordnet. Dadurch kann die Vorspannkraft kontrolliert werden. Die Längenverstellvorrichtung 10 ist als eine an der Kraftnebenschlußvorrichtung 11 gelagert angeordnete Spindelmutter 20 mit zugeordneter Spindel 21 ausgebildet. Zwei mit der Spindelmutter 20 verbundene Stellmotoren 22 sind an der Kraftnebenschlußvorrichtung 11 vorgesehen. Die Spindelmutter 20 ist innerhalb des Rahmens der Kraftnebenschlußvorrichtung 11 auf einem Axialkugellager 23 angeordnet. Die Gesamtanordnung 24 ist in einem Prüfmaschinengehäuse 25 angeordnet. Dabei ist die Kraftangriffsvorrichtung 12 in einem Querjoch 26 des Prüfmaschinengehäuses kugelig gelagert. Die Antriebsvorrichtung 17 ist als Hydrauliksystem 27 mit Kolben 28 und Zylinder 29 ausgebildet und mit dem Prüfmaschinentisch 30 verbunden. Der Zu- bzw. Abfluß der Hydraulikflüssigkeit über Hydraulikleitungen 31 und 32 wird über die Vorrichtung 18 zur Vorgabe und Konstanthalten der Vorspannkraft geregelt.

Diese Anordnung stellt in vorteilhafter Weise eine einstellbare Bewegungsquelle als Längenverstelleinrichtung 10 zur Vorgabe definierter Verformungswege dar. Durch die konstante Vorspannung der Prüfmaschine wird der Einfluß der Prüfmaschinenverformung eliminiert. Die erste Kraftmeßvorrichtung 16 nimmt dabei die direkt auf die Probe 9 wirkende Prüfkraft auf. Diese Ausführung der Erfindung erweist sich als besonders günstig, da ein geringer technischer Aufwand zur Verwirklichung nötig ist.

Zur Durchführung eines Zugversuchs wird die Längenverstellvorrichtung 10 zunächst soweit abwärts verstellt, daß die Antriebsvorrichtung 17 nur die Kraftnebenschlußvorrichtung belastet. Die Werkstoffprobe 9 bleibt dabei noch kraftfrei. Die erzeugte Kraft der Antriebsvorrichtung 17 der Prüfmaschine wird nach Anzeige der zweiten Kraftmeßvorrichtung 19 auf einen konstant zu haltenden Wert eingestellt, der mit Sicherheit größer ist als die maximal zu erwartende Prüfkraft an der Probe 9. Durch ein vorbestimmtes Verstellen der Spindelmutter 20 durch den Stellmotor 22 wird die Spindel 21, samt der an ihr befestigten zweiten Probeneinspannvorrichtung 15, der Zugkraft folgend um einen entsprechenden Betrag abwärts bewegt und somit die Probe gedehnt. Die Kraftnebenschlußvorrichtung 11 wird dabei wegen der nun eingetretenen Kraftverteilung um den Betrag der von der Probe 9 aufgenommenen Kraft entlastet. Die Probenkraft wird mit der ersten Kraftmeßvorrichtung 16 gemessen. Die erforderliche Verformungsarbeit leistet die Antriebsvorrichtung 17, deren Kolben 28 sich unter Aufrechterhaltung der Gesamtkraft jeweils um den von der Spindel 21 nachgelassenen Verstellweg abwärts bewegt. Bei abnehmendem Verformungswiderstand und schließlich beim Bruch der Probe 9 kehrt der Kraftfluß aus der Probe 9 in die Kraftnebenschlußvorrichtung 11 zurück. Die mit der zweiten Kraftmeßvorrichtung 19 erfaßte Gesamtkraft bleibt dabei unverändert. Diese wird erst nach abgeschlossenem Prüfvorgang langsam wieder zurückgenommen.

Allgemein ist der Prüfvorgang durch folgende Verfahrensschritte gekennzeichnet:
a) die Prüfmaschine wird über eine Kraftnebenschlußanordnung bei noch unbelasteter Probe nach der Anzeige einer Meßeinrichtung, die die Maschinenkraft aufnimmt, auf einen Wert vorbelastet, der größer ist als eine zur Prüfung der Probe erforderliche Höchstkraft oder der einem während der Prüfung nicht zu überschreitenden Grenzwert entspricht, wobei der Einfluß der Prüfmaschinennachgiebigkeit vollständig eliminiert ist, weil die Vorbelastung der Prüfmaschine während des gesamten Prüfvorgangs konstant gehalten wird,
b) eine definierte direkte Verformung der Probe wird durch dosiertes Verstellen einer Längenverstellvorrichtung auf der Prüfkraftachse in einem in bezug auf die Vorbelastung der Prüfmaschine nachgebenden Richtungssinn ermöglicht, wobei sich der Kraftfluß je nach Verformungswiderstand der Probe zunehmend von der Kraftnebenschlußvorrichtung auf die Probe und die Kraftmeßeinrichtung verlagert, während die Antriebsvorrichtung, unter Konstanthaltung der Gesamtkraft, den als Verstellweg der Verstellvorrichtung vorgegebenen Verformungsweg der Probe automatisch nachstellt und so die erforderliche Verformungsenergie liefert,
c) bei Abnahme des Verformungswiderstandes der Probe wird der Kraftfluß entsprechend automatisch in die Kraftnebenschlußvorrichtung bis zur vollständigen Kraftübernahme beim Probenbruch zurückverlagert, wobei die Gesamtkraft der Antriebsvorrichtung auch weiterhin unverändert bleibt,
d) eine Entlastung der Prüfmaschine erfolgt nach abgeschlossenem Prüfvorgang.

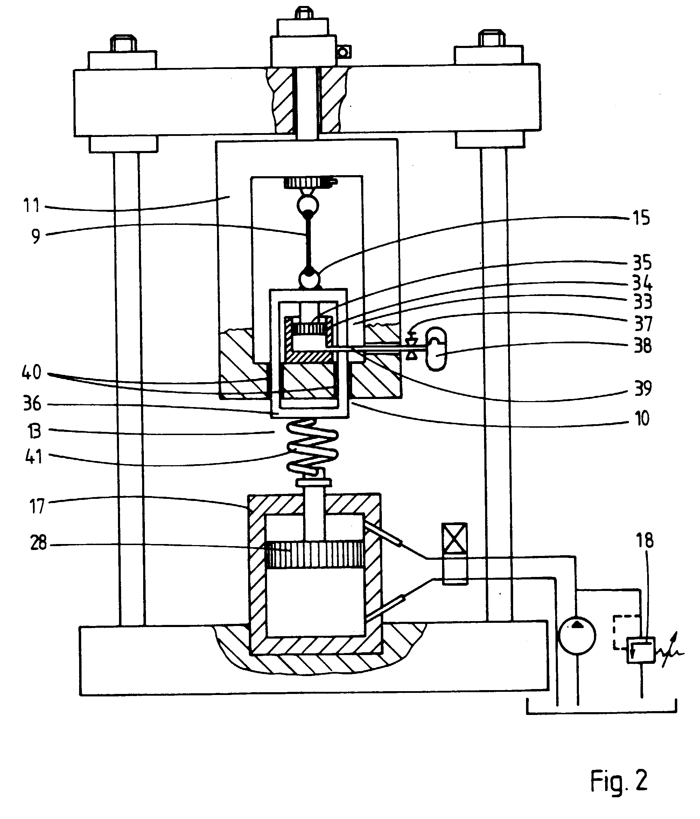

In Figur 2 ist ein zweites Ausführungsbeispiel der Erfindung dargestellt. Die Prüfmaschine entspricht im wesentlichen dem anhand von Figur 1 beschriebenen Ausführungsbeispiel. Lediglich die Längenverstellvorrichtung 10 weist eine andere Ausbildung auf. Die Längenverstellvorrichtung 10 ist in Form eines Hydrauliksystems 33 mit Hydraulikzylinder 34 und Kolben 35 ausgebildet. Die Längenverstellvorrichtung 10 ist umgreifend, über einen Rahmen 36, mit der zweiten Kraftangriffsvorrichtung 13 verbunden. Ein steuerbares Ventil 37 ist mit einem angeschlossenen Niederdruckspeicher 38 im Hydrauliksystem 33 am Hydraulikzylinder 34 über eine Leitung 39 verbunden angeordnet. In der Kraftnebenschlußanordnung 11 ist eine Aussparung 40 für den Rahmen 36 angeordnet. An der Antriebsvorrichtung 17 ist eine Feder 41 als Verbindung zur zweiten Kraftangriffsvorrichtung 13 vorgesehen.

Bei der Prüfmaschine wird die Prüfkraft von der Kraftnebenschlußvorrichtung 11 auf die Probe 9 mit einer hydraulisch verstellbaren Längenverstellvorrichtung 10 übertragen. Zu Beginn eines Zugversuches ist der Zylinder 34 des Hydrauliksystems 33 der Längenverstellvorrichtung gefüllt. Die Position der zweiten Probeneinspannvorrichtung 15 ist dadurch so vorgegeben, daß die Probe 9 unbelastet bleibt, wenn die Prüfmaschine über die eingeschlossene Flüssigkeit im Zylinder 34 die Kraftnebenschlußanordnung 11 vorbelastet. Durch Ablassen einer vorbestimmten Menge Hydraulikflüssigkeit aus dem Zylinder 34 der Längenverstellvorrichtung 10 durch das Ventil 37 wird die Position der zweiten Probeneinspannvorrichtung 15 und damit die Dehnung der Probe 9 definiert verändert. Die abgelassene Flüssigkeitsmenge wird von einem Niederdruckspeicher 38 aufgenommen. Die Verformungsarbeit wird durch die Antriebsvorrichtung 17 aufgebracht. Die Vorrichtung 18 zur Konstanthaltung der Vorspannkraft entspricht dem anhand von Figur 1 geschilderten Vorgang. Beim Entlasten der Prüfmaschine nach abgeschlossenem Prüfvorgang strömt die Flüssigkeit durch den geringen Überdurck des Niederdruckspeichers 38 in den Zylinder 34 der Längenverstellvorrichtung 10 zurück und bringt den Kolben 35 wieder in seine Ausgangsposition. Die Feder 41 ist für eine schlagartige Verformung der Probe 9 zwischen dem Antriebssytem 17 und der Kraftangriffsvorrichtung 13 angeordnet, so daß bei dieser Art der Anwendung die Feder 41 einen gewissen Vorrat an Verformungsenergie zur Überbrückung der Antriebsbeschleunigung bereithält.

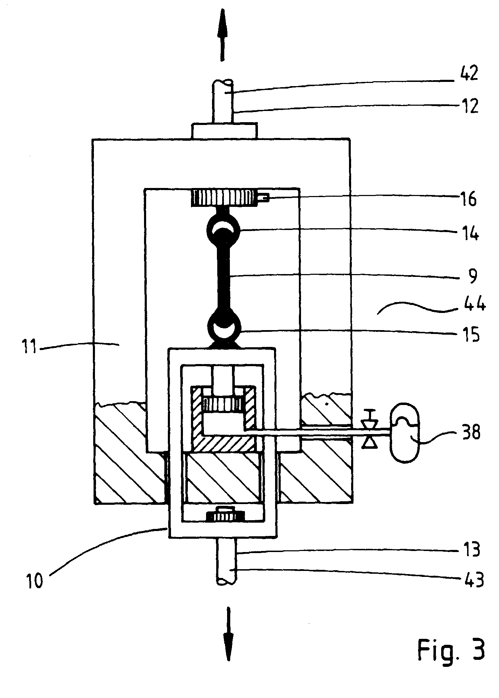

In Figur 3 ist ein drittes Ausführungsbeispiel der Erfindung dargestellt. Es entspricht im wesentlichen dem anhand von Figur 2 beschriebenen zweiten Ausführungsbeispiel. Die dargestellte Anordnung 44 bildet eine hydraulisch verstellbare selbständige Einheit. Sie besteht aus der Kraftnebenschlußanordnung 11, aus der hydraulischen Längenverstellvorrichtung 10 mit Niederdruckspeicher 38, der ersten Kraftmeßvorrichtung 16, und den Probeneinspannvorrichtungen 14 und 15 für die Probe 9. Diese selbständige Anordnung 44 ist zum Einsatz in herkömmliche Zugprüfmaschinen bzw. zu deren Nachrüstung gedacht. Bei diesem Ausführungsbeispiel sind die Kraftangriffsvorrichtungen 12 und 13 im Querschnitt zylindrisch ausgebildet, so daß sie in die Probeneinspannvorrichtungen 14 und 15 einer herkömmlichen Prüfmaschine einspannbar sind. Die Probeneinspannvorrichtungen 14 und 15 nehmen dabei die Kraftangriffsbereiche 42 und 43 auf.

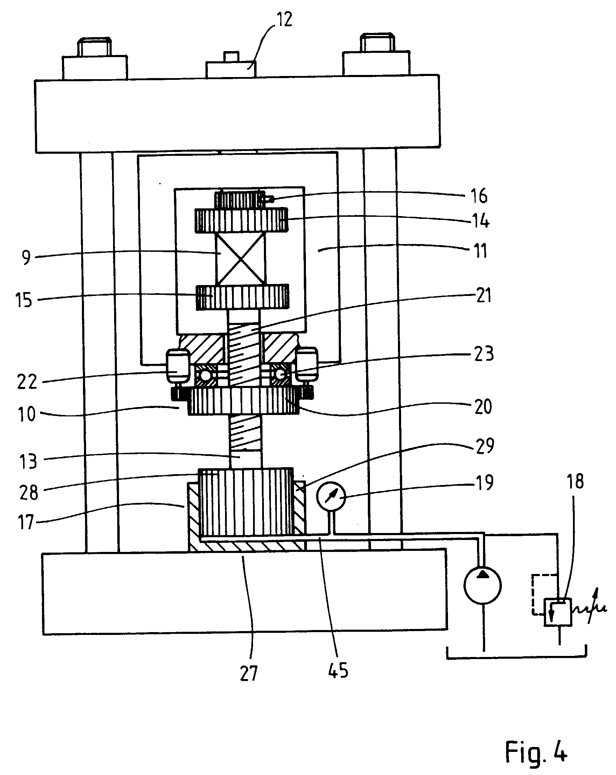

In Figur 4 ist ein viertes Ausführungsbeispiel dargestellt. Dieses Ausführungsbeispiel ist eine Variante der anhand von Figur 1 beschriebenen Ausführung der Erfindung. Die Stellmotoren 22, die Spindelmutter 20 und das Kugellager 23 sind auf der Außenseite der rahmenartigen, rechtekkigen Kraftnebenschlußanordnung 11 angeordnet, da dieses Ausführungsbeispiel für Druckversuche vorgesehen ist. Desweiteren ist die zweite Kraftmeßvorrichtung 19 in einer Hydraulikzuführleitung 45 angeordnet. Die Antriebsvorrichtung 17 ist auch als Hydrauliksystem 27 ausgebildet, jedoch mit einfach wirkendem Kolben. Hydraulikkolben 28, Zylinder 29, Spindel 21, Spindelmutter 20, Kraftangriffsvorrichtungen 12 und 13, sowie die Probeneinspannvorrichtungen 14 und 15 sind für Druckversuche größer dimensioniert ausgebildet.

Zur Durchführung eines Druckversuchs wird zunächst nur die Kraftnebenschlußvorrichtung 11 über die Längenverstellvorrichtung 10 mit einer Kraft vorbelastet, wobei sie an der zweiten Kraftmeßvorrichtung 19 angezeigt wird und dabei größer als die maximal zu erwartende Probenkraft ist. Dann wird durch dosiertes Verstellen der Längenverstellvorrichtung 10 die Probe 9 definiert gestaucht, wobei die Antriebsvorrichtung den vorgegebenen Stauchweg bei konstant gehaltener Kraft nachschiebt und so die Verformungsarbeit leistet. Die dabei in der Probe auftretende und von der ersten Kraftmeßvorrichtung 16 erfaßte Verformungswiderstandskraft wird wegen der Kraftverteilung an der Längenverstellvorrichtung 10 als Entlastungsbetrag der Kraftnebenschlußvorrichtung 11 entnommen, während die Prüfmaschinengesamtkraft konstant bleibt. Erst nach abgeschlossenem Prüfvorgang wird die Prüfmaschine wieder entlastet.

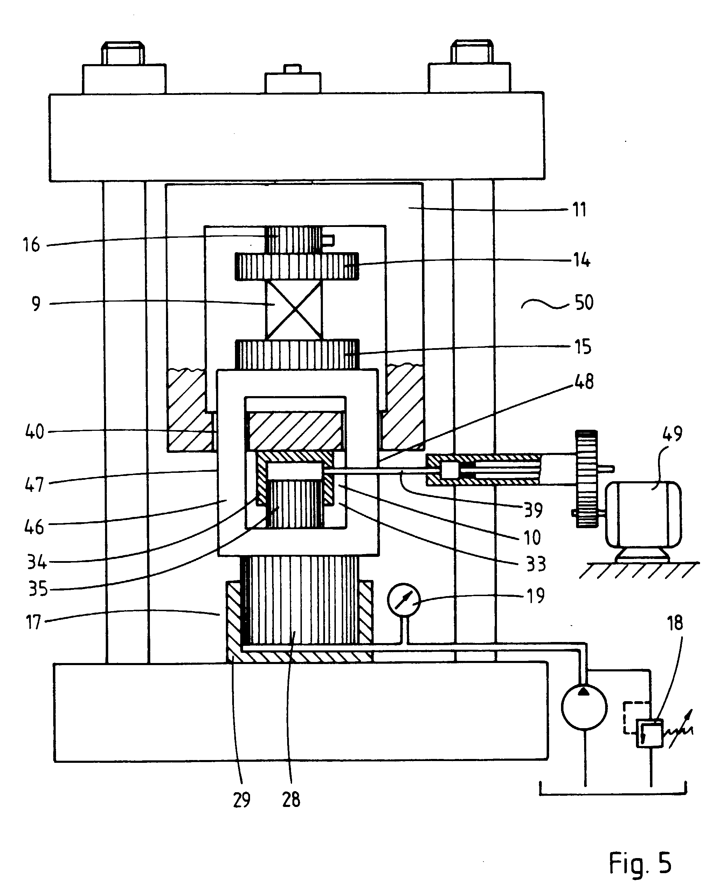

In Figur 5 ist ein fünftes Ausführungsbeispiel der Erfindung dargestellt. Dieses Ausführungsbeispiel ist eine Variante des vierten Ausführungsbeispiels. Die Längenverstellvorrichtung 10 ist als Hydrauliksystem 33 ausgebildet. Der Kolben 28 der Antriebsvorrichtung 17 entspricht der zweiten Kraftangriffsvorrichtung 13. Auf dem Kolben 28 ist ein rechteckiger Rahmen 46 angeordnet, der den Hydraulikzylinder 34 und Hydraulikkolben 35 der Längenverstellvorrichtung 10 umgreift. Durch die Aussparungen 40 des Kraftnebenschlusses 11 erstreckt sich der Rahmen 46 mit seinen beiden Seitenführungen 47 und 48 ins Innere des rahmenartigen Kraftnebenschlusses 11. Im Inneren des Kraftnebenschlusses 11 ist der Rahmen 46 mit der zweiten Probeneinspannvorrichtung 15 verbunden. Der Hydraulikzylinder 34 der Längenverstellvorrichtung 10 ist über eine Leitung 39 mit einer Spindel-Kolbenpumpe 49 verbunden. Ansonsten entspricht die Gesamtanordnung 50 dem vierten Ausführungsbeispiel.

Diese Ausführung der Prüfmaschine eignet sich besonders als Druckprüfmaschine, bei der die Verformungsvorgabe für die Probe 9 und die damit zusammenhängende Kraftverteilung mittels der Längenverstellvorrichtung 10 erfolgt. Die Längenverstellvorrichtung 10 überträgt die Kraft der Antriebsvorrichtung 17 zunächst über die Hydraulikflüssigkeit auf die Kraftnebenschlußanordnung 11. Durch gesteuertes Ablassen der Flüssigkeit wird die Position der zweiten Probeneinspannvorrichtung 15 verändert und damit die Probe 9 gestaucht. Die Kraft verteilt sich dabei auf die Probe 9 und die Kraftnebenschlußanordnung 11, d.h. die Kraftnebenschlußanordnung 11 wird um den von der Probe 9 übernommenen Kraftbetrag entlastet. Mit der ersten Kraftmeßeinrichtung 16 wird die auf die Probe wirkende Kraft erfaßt und gemessen. Die Prüfmaschine, die während des gesamten Prüfvorgangs unter konstanter Kraft verbleibt, deren Wert über der maximalen Probenkraft liegt, wird nach Versuchsende wieder entlastet. Die Veränderung des Flüssigkeitsvolumens im Zylinder 34 der Längenverstellvorrichtung 10 erfolgt mittels der Spindel-Kolbenpumpe 49.

Analog den beschriebenen Ausführungsbeispielen zu Vorrichtung und Verfahren betreffend beliebige zeitabhängige Verformungen von Werkstoffproben in Zug- und Druckrichtung kann die Prüfmaschine unter Beibehaltung des grundlegenden Erfindungsgedankens auch für Torsionsverformungen eingesetzt werden. Die Werkstoffprobe wird dabei einer Momentbelastung ausgesetzt. Die bei der Zug- bzw. Druckprüfung durch die Prüfmaschinenanordnung erzielten Vorteile bleiben erhalten. Die erste und zweite Kraftangriffsvorrichtung 12 und 13 bildet dabei jeweils entsprechend eine Momentangriffsvorrichtung, die erste und zweite Kraftmeßvorrichtung 16 und 19 jeweils eine Momentmeßvorrichtung, die Antriebsvorrichtung zur Krafterzeugung eine Antriebsvorrichtung zur Momenterzeugung, der Kraftnebenschluß 11 wirkt als Momentnebenschluß und die Längenverstellvorrichtung 10 ist als Winkelverstellvorrichtung ausgebildet. Weiterhin ist die zweite Probeneinspannvorrichtung 15 dabei über die Winkelverstellvorrichtung in bezug auf das nicht mit der Momentangriffsvorrichtung verbundene Ende der Momentnebenschlußanordnung im Drehsinn der Momentwirkung drehbar gelagert.

Auch bei dieser Ausbildung wirkt die Prüfmaschine als direkte Bewegungsquelle, d.h. Energiequelle mit eingeprägter Bewegung, die ein Prüfverfahren mit unmittelbarer Verformungsvorgabe und einstellbarer Momentbegrenzung gestattet. Auch bei dieser Ausbildung der Prüfmaschine ist die Prüfmaschinennachgiebigkeit ohne Einfluß auf die Torsionsuntersuchungen.

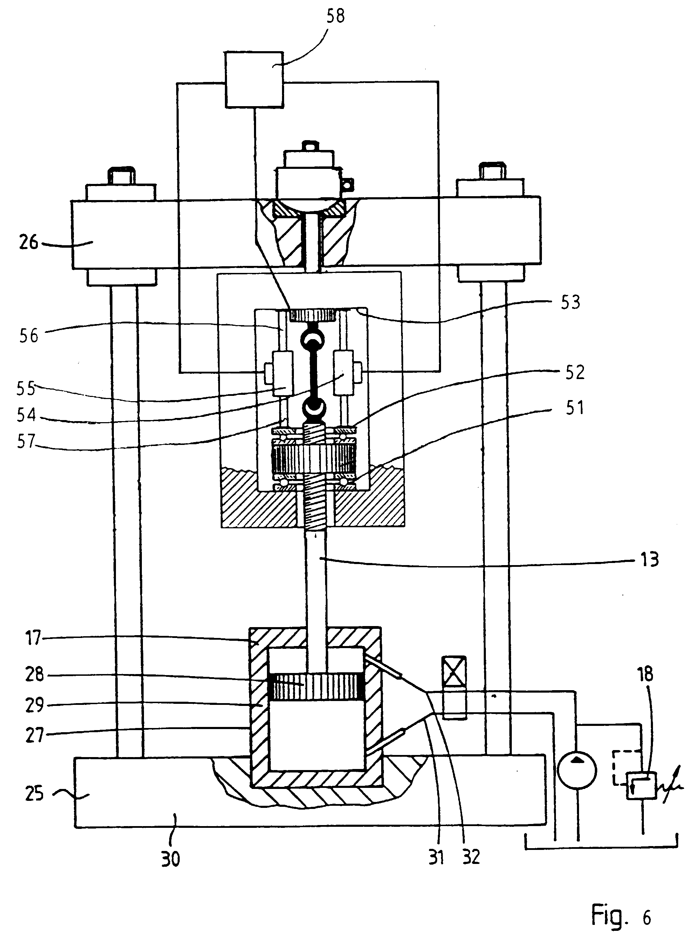

In der Figur 6 ist in einer Frontansicht ein weiteres Ausführungsbeispiel der Erfindung dargestellt. Die Prüfmaschine weist dabei im wesentlichen die Merkmale des anhand von Figur 1 beschriebenen Ausführungsbeispiels auf. Lediglich die Kraftnebenschlußanordnung 11 ist hinsichtlich der Figur 1 erweitert ausgeführt. Der Übersichtlichkeit halber sind die die Spindelmutter 20 bewegenden Stellmotoren 22 in dieser Figur nicht dargestellt.

Auf der Spindelmutter 20 ist ein weiteres axiales Kugellager 51 konzentrisch angeordnet. Zwischen der nach oben weisenden Fläche 52 des Kugellagers 51 und der nach unten weisenden, im oberen Bereich der Kraftnebenschlußanordnung 11 befindlichen Fläche 53 sind zwei in vertikaler Richtung wirkende Belastungsvorrichtungen 54 und 55 vorgesehen. Eine Belastungsvorrichtung 54 bzw. 55 besteht dabei im wesentlichen aus zwei Hydraulikzylindern und zwei ausfahrbaren Füßen 56 und 57, die der unteren bzw. oberen Fläche 52 bzw. 53 zur Kraftaufnahme zugeordnet sind. Über die Füße 56 und 57 sind Belastungen durch Verspannen der Belastungsvorrichtung 54 bzw. 55 jeweils zwischen den oberen und unteren Kraftaufnahmeflächen 52 und 53 symmetrisch auf die Kraftnebenschlußanordnung 11 aufbringbar. Im Verspannten Zustand der Belastungsvorrichtungen 54 und 55 sind diese dann auch in der Kraftnebenschlußanordnung 11 fixiert.

Um eine koordinierte wirkung der Belastungsvorrichtungen 54 und 55 während des Prüfvorgangs zu gewährleisten, sind diese und die erste Kraftmeßvorrichtung 16 über Leitungen mit einer Steuereinrichtung 58 verbunden. Dabei reagiert die Steuereinrichtung 58 auf Signale der Kraftmeßvorrichtung 16 derart steuernd auf die Belastungsvorrichtungen 54 und 55, daß entsprechend der steigenden Belastung der Probe 9 die Füße 56 und 57 zunehmend von den Hydraulikzylindern auf die zugeordneten Kraftaufnahmeflächen 52 und 53 gedrückt werden. Die Belastung als auch die Deformation der Kraftnebenschlußvorrichtung 11 wird somit während des Prüfvorgangs konstant gehalten.

Der Prüfvorgang wird durch diese Ausführung des Kraftnebenschlusses 11 mit den Belastungsvorrichtungen 54 und 55 weiter optimiert, da auch die sehr geringen Relativbewegungen des Kraftnebenschlusses 11 unter die Grenze der Meßbarkeit herabgesetzt werden.

## Patentansprüche

1. Prüfmaschine für die mechanische Prüfung von Werkstoffproben, insbesondere für Zug- und Druckprüfungen, bestehend aus
einer ersten und einer zweiten Kraftangriffsvorrichtung (12, 13),
einer mit der zweiten Kraftangriffsvorrichtung (13) verbundenen Antriebsvorrichtung (17) zur Erzeugung einer Antriebskraft,
einer Zusatzeinrichtung (24), die
zwischen der ersten und zweiten Kraftangriffsvorrichtung (12, 13) angeordnet ist und eine Kraftnebenschlußvorrichtung (11) sowie eine erste Kraftmeßvorrichtung (16) für die Prüfkraft und eine erste und eine zweite Probeneinspannvorrichtung (14, 15) für die Werkstoffprobe aufweist, wobei
die Kraftnebenschlußvorrichtung (11) mit der ersten und zweiten Kraftangriffsvorrichtung (12, 13) verbunden ist und eine von der zweiten Kraftangriffsvorrichtung auf die erste Kraftangriffsvorrichtung (12, 13) wirkende, die in den beiden Probeneinspannvorrichtungen (14, 15) befindliche Werkstoffprobe (9) überbrückende Teilkraft überträgt,
und einer zweiten Kraftmeßvorrichtung (19) zur Messung der Antriebskraft,
**dadurch gekennzeichnet,**
daß in der Zusatzeinrichtung (24) die Kraftnebenschlußvorrichtung (11) steif ausgebildet ist,
daß eine in Richtung der Prüfkraft wirkende Längen/erstellvorrichtung (10) zur Erzeugung definierter Probenverformungswege vorgesehen ist, durch die die zweite Probeneinspannvorrichtung (15) an dem der ersten Probeneinspannvorrichtung gegenüberliegenden Ende der Kraftnebenschlußvorrichtung (11) in Richtung der Prüfkraft verstellbar gelagert und mit der zweiten Kraftangriffsvorrichtung (13) verbunden ist, wobei Mittel (22, 23) vorgesehen sind, mittels derer je nach Verformungswiderstand der Probe (9) ein als Prüfkraft wirkender Anteil der über den Kraftnebenschluß (11) geführten Antriebskraft automatisch abgezweigt und über die erste Kraftmeßeinrichtung (16) gemessen wird,
daß eine mit der Antriebsvorrichtung (17) verbundene Steuervorrichtung (18) mit der zweiten Kraftmeßvorrichtung (19) zusammenwirkt, um die während des Prüfvorganges durch die Antriebsvorrichtung (17) zu erbringende Antriebskraft auf einen vorgegebenen, konstanten Werteinzustellen.

2. Prüfmaschine nach Anspruch 1, dadurch gekennzeichnet, daß die Antriebskraft eine Druck- oder Zugkraft ist und daß die Kraftnebenschlußvorrichtung (11) als Rahmen, Topf oder Käfig ausgebildet ist.

3. Prüfmaschine nach einem der vorangehenden Ansprüche, dadurch gekennzeichnet, daß die Längenverstellvorrichtung (10) als eine an der Kraftnebenschlußvorrichtung (11) gelagerte Spindelmutter (20) mit zugeordneter Spindel (21) ausgebildet ist.

4. Prüfmaschine nach Anspruch 3, dadurch gekennzeichnet, daß ein mit der Spindelmutter (20) verbundener Stellmotor (22) an der Kraftnebenschlußvorrichtung (11) vorgesehen ist.

5. Prüfmaschine nach Anspruch 3 bis 4, dadurch gekennzeichnet, daß die Spindelmutter (20) und der zugeordnete Stellmotor (22) für Zugversuche innerhalb bzw. für Druckversuche außerhalb der Kraftnebenschlußvorrichtung (11) angeordnet sind.

6. Prüfmaschine nach einem der Ansprüche 1 oder 2, dadurch gekennzeichnet, daß die Längenverstellvorrichtung (10) in Form eines Hydrauliksystems (33) mit Hydraulikzylinder (34) und Kolben (35) ausgebildet ist, wobei die Längenverstellvorrichtung (10) den Hydraulikzylinder (34) mit der zweiten Kraftangriffsvorrichtung (13) verbindet.

7. Prüfmaschine nach Anspruch 6, dadurch gekennzeichnet, daß ein steuerbares Ventil (37) mit angeschlossenem Niederdruckspeicher (38) im Hydrauliksystem (33) nahe dem Hydraulikzylinder (34) angeordnet ist.

8. Prüfmaschine nach Anspruch 1, dadurch gekennzeichnet, daß die Kraftangriffsvorrichtungen (12, 13) im Querschnitt derart zylindrisch oder rechteckig ausgebildet ist, daß sie in die Probeneinspannvorrichtungen einer herkömmlichen Prüfmaschine einspannbar sind, wobei dann die Probeneinspannvorrichtungen Kraftangriffsbereiche (42,43) bilden.

9. Prüfmaschine nach einem der vorangehenden Ansprüche, dadurch gekennzeichnet, daß für Druck- oder Zugversuche mindestens eine der Kraftangriffsvorrichtungen (12, 13) momentfrei gelagert ist.

10. Prüfmaschine nach einem der vorangehenden Ansprüche, dadurch gekennzeichnet, daß zwischen der Antriebsvorrichtung (17) und der zweiten Kraftangriffsvorrichtung (13) eine Feder (41) zur Speicherung von Antriebsenergie angeordnet ist.

11. Prüfmaschine für die mechanische Prüfung von Werkstoffproben, insbesondere für Torsionsprüfungen, bestehend aus
einer ersten und einer zweiten Momentangriffsvorrichtung (12, 13),
einer mit der zweiten Momentangriffsvorrichtung (13) verbundenen Antriebsvorrichtung (17) zur Erzeugung eines Antriebsmomentes,
einer Zusatzeinrichtung (24), die
zwischen der ersten und zweiten Momentangriffsvorrichtung (12, 13) angeordnet ist und eine Momentnebenschlußvorrichtung (11) sowie eine erste Momentmeßvorrichtung (16) für das Prüfmoment und eine erste und eine zweite Probeneinspannvorrichtung (14, 15) für die Werkstoffprobe aufweist, wobei
die Momentnebenschlußvorrichtung (11) mit der ersten und zweiten Momentangriffsvorrichtung (12, 13) verbunden ist und ein von der zweiten Momentangriffsvorrichtung auf die erste Momentangriffsvorrichtung (12, 13) wirkendes, die in den beiden Probeneinspannvorrichtungen (14, 15) befindliche Werkstoffprobe (9) überbrückendes Teilmoment überträgt,
und einer zweiten Momentmeßvorrichtung (19) zur Messung des Antriebsmomentes
**dadurch gekennzeichnet,**
daß in der Zusatzeinrichtung (24) die Momentnebenschlußvorrichtung (11) steif ausgebildet ist,
daß eine in Richtung der Prüfkraft wirkende Winkelverstellvorrichtung (10) zur Erzeugung definierter Probenverdrehwinkel vorgesehen ist, durch die die zweite Probeneinspannvorrichtung (15) an dem der ersten Probeneinspannvorrichtung gegenüberliegenden Ende der Momentnebenschlußvorrichtung (11) in Richtung des Prüfmoments verstellbar gelagert und mit der zweiten Momentangriffsvorrichtung (13) verbunden ist, wobei Mittel (22, 33) vorgesehen sind, mittels derer je nach Verformungswiderstand der Probe (9) ein als Prüfmoment wirkender Anteil des über den Momentnebenschluß (11) geführten Antriebsmoments automatisch abzweigt und über die erste Momentmeßeinrichtung (16) gemessen wird,
daß eine mit der Antriebsvorrichtung (17) verbundene Steuervorrichtung (18) mit der zweiten Momentmeßvorrichtung (19) zusammenwirkt, um das während des Prüfvorganges durch die Antriebsvorrichtung (17) zu erbringende Antriebsmoment auf einen vorgegebenen, konstanten Wert einzustellen.

12. Verfahren für die mechanische Prüfung von Werkstoffproben und Bauteilen mit einer Prüfmaschine nach Anspruch 1 gekennzeichnet durch folgende Verfahrenschritte:
a) die gesamte Prüfmaschine wird über den Kraftnebenschluß (11) bei noch unbelasteter Probe (9) nach Anzeige einer zweiten Kraftmeßvorrichtung (19), die die Maschinenkraft aufnimmt, mittels des Antriebs auf einen konstanten Wert vorbelastet, der größer ist als eine zur Prüfung der Probe erforderliche Höchstkraft oder der einem festgesetzten Grenzwert entspricht der während des Prüfvorgangs nicht überschritten werden soll. durch dessen Konstanthaltung während des Prüfvorgangs aber in jedem Falle sämtliche kraftabhängigen schädlichen Einflüsse der Prüfmaschine prinzipiell eleminiert werden,
b) die Probe (9) wird definiert und direkt verformt durch dosiertes Verstellen einer Längenverstellvorrichtung (10) in Richtung der wirkenden Antriebskraft (Maschinenkraft), wobei
sich der Kraftfluß dem Verformungswiderstand der Probe (9) entsprechend zu einem Teil vom Kraftnebenschluß (11) auf die Probe (9) und die erste Kraftmeßvorrichtung (16) verlagert, während die Antriebsvorrichtung (17), den als Verstellweg der Längenverstellvorrichtung (10) vorgegebenen Verformungsweg der Probe (9) unter konstanter Antriebskraft nachstellt und so die erforderliche Probenverformungsarbeit leistet und bei Abnahme des Verformungswiderstandes der Probe (9) der Kraftfluß entsprechend wieder in den Kraftnebenschluß (11) zurückverlagert und bei Probenbruch schließlich wieder vollständig von diesem übernommen wird,
c) die Entlastung der Prüfmaschine erfolgt nach abgeschlossenem Prüfvorgang.

## Claims

1. Test machine for mechanical testing of material samples, particularly for tensile and compressive tests, consisting of
a first and a second force applying device (12,13),
a drive mechanism (17), connected to the second force applying device (13), for generating a drive force,
a supplementary device (24) which is arranged between the first and second force applying devices (12, 13) and has a force shunting device (11) and a first force measuring device (16) for the test force and a first and a second sample clamping device (14,15) for the material sample, wherein
the force shunting device (11) is connected to the first and second force applying devices (12,13) and transmits a component force from the second force applying device acting on the first force applying device (12, 13), this component force spanning the material sample (9) located in the two sample clamping devices (14,15), and
a second force measuring device (19) for measuring the driving force, characterised in that in the supplementary device (24) the force shunting device (11) is of rigid construction,
a length adjusting means (10) acting in the direction of the test force is provided in order to produce defined sample deformation paths, by means of which the second sample clamping device (15) is mounted adjustably in the direction of the test force at the end of the force shunting device (11) opposite the first sample clamping device and is connected to the second force applying device (13), whilst means (22,33) are provided by which, depending on the deformation resistance of the sample (9), a proportion of the driving force transmitted via the force shunt (11) and acting as a test force is automatically diverted and measured by means of the first force measuring device (16),
a control apparatus (18) connected to the drive mechanism (17) cooperates with the second force measuring device (19) in order to adjust the driving force which is to be applied by the drive mechanism (17) during the testing process to a given constant level.

2. Test machine according to claim 1, characterised in that the driving force is a compressive or tensile force and the force shunting device (11) is constructed as a frame, pot or cage.

3. Test machine according to one of the preceding claims, characterised in that the length adjusting means (10) are constructed as a spindle nut (20) with associated spindle (21) mounted on the force shunting device (11).

4. Test machine according to claim 3, characterised in that an adjustment motor (22) connected to the spindle nut (20) is provided on the force shunting device (11).

5. Test machine according to claim 3 or 4,
characterised in that the spindle nut (20) and the associated adjustment motor (22) are arranged inside the force shunting device (11) for tensile testing or outside the force shunting device (11) for compressive testing.

6. Test machine according to one of claims 1 and 2,
characterised in that the length adjusting device (10) is in the form of a hydraulic system (33) with a hydraulic cylinder (34) and piston (35), whilst the length adjusting device (10) connects the hydraulic cylinder (34) to the second force applying device (13).

7. Test machine according to claim 6, characterised in that a controllable valve (37) with attached low pressure store (38) is mounted in the hydraulic system (33) near the hydraulic cylinder (34).

8. Test machine according to claim 1, characterised in that the force applying devices (12,13) are cylindrical or rectangular in cross-section so that they can be clamped in the sample clamping devices of a conventional test machine, wherein the sample clamping devices then form force applying areas (42,43).

9. Test machine according to one of the preceding claims, characterised in that at least one of the force applying devices (12,13) is mounted free from moment for compressive or tensile tests.

10. Test machine according to one of the preceding claims, characterised in that a spring (41) for storing drive energy is arranged between the drive mechanism (17) and the second force applying device (13).

11. Test machine for the mechanical testing of material samples, particularly for torsional tests, consisting of
a first and a second moment applying device (12, 13),
a drive mechanism (17), connected to the second moment applying device (13), for generating a drive moment,
a supplementary device (24) which is arranged between the first and second moment applying devices (12, 13) and has a moment shunting device (11) and a first moment measuring device (16) for the test moment and a first and a second sample clamping means (14,15) for the material sample, wherein
the moment shunting device (11) is connected to the first and second moment applying devices (12,13) and transmits a partial moment from the second moment applying device acting on the first moment applying device (12, 13), this partial moment spanning the material sample (9) located in the two sample clamping devices (14,15), and
a second moment measuring device (19) for measuring the driving moment, characterised in that in the supplementary device (24) the moment shunting device (11) is of rigid construction,
an angle adjusting means (10) acting in the direction of the test moment is provided in order to produce defined sample angles, by means of which the second sample clamping device (15) is mounted adjustably in the direction of the test moment at the end of the moment shunting device (11) opposite the first sample clamping device and is connected to the second moment applying device (13), whilst means (22,33) are provided by which, depending on the deformation resistance of the sample (9), a proportion of the driving moment transmitted via the moment shunt (11) and acting as a test moment is automatically diverted and measured by means of the first moment measuring device (16),
a control apparatus (18) connected to the drive mechanism (17) cooperates with the second moment measuring device (19) in order to adjust the driving moment which is to be applied by the drive mechanism (17) during the testing process to a given constant level.

12. Process for the mechanical testing of material samples and components using a test machine according to claim 1, characterised by the following procedural steps:
a) the entire test machine is preloaded to a constant level, by means of the drive, via the force shunt (11), with the sample (9) as yet unloaded, in accordance with the indications from a second force measuring device (19) which records the machine force, this constant level being greater than the maximum force required to test the sample or corresponding to a fixed threshold which must not be exceeded during the testing procedure, but which, if held constant during the testing procedure, will theoretically eliminate all force-related harmful effects of the test machine,
b) the sample (9) is deliberately and directly deformed by the measured adjustment of a length adjusting device (10) in the direction of the effective driving force (machine force), whilst
the flux of force moves to some extent from the force shunt (11) onto the sample (9) and the first force measuring device (16), in accordance with the deformation resistance of the sample (9), whilst the drive mechanism (17) adjusts the deformation path of the sample (9) given as the adjustment path of the length adjusting device (10), whilst the driving force remains constant and in this way produces the desired sample deformation work, and as the deformation resistance of the sample (9) decreases the flux of force moves back into the force shunt (11) accordingly and, as the sample breaks, is finally taken over entirely by said shunt (11),
c) the load is removed from the test machine when the test procedure is complete.

## Revendications

1. Machine d'essai pour l'essai mécanique des éprouvettes de matériaux, en particulier pour essais de traction et de compression, constituée de
un premier et un second dispositifs (12, 13) d'application de la force.
un dispositif d'entraînement (17), relié au second dispositif (13) d'application de la force, pour produire une source d'entraînement,
un dispositif supplémentaire (24) qui
est disposé entre le premier et le second dispositifs (12, 13) d'application de la force et présente un dispositif (11) de circuit auxiliaire de la force ainsi qu'un premier dispositif (16) de mesure de la force pour la force exercée sur l'éprouvette et un premier et un second dispositifs (14, 15) de bridage de l'éprouvette de matériau, étant précisé que
le dispositif (11) de circuit auxiliaire de la force est relié au premier et au second dispositifs (12, 13) d'application de la force et transmet une force partielle qui, depuis le second dispositif d'application de la force, agit sur le premier dispositif (12, 13) d'application de la force et shunte l'éprouvette de matériau (9) qui se trouve dans les deux dispositifs (14, 15) de bridage de l'éprouvette,
ainsi que d'un second dispositif (19) de mesure de la force pour mesurer la force d'entraînement,
caractérisée par le fait
que dans le dispositif supplémentaire (24), le dispositif (11) de circuit auxiliaire de la force est conçu rigide,
qu'il est prévu, pour produire des courses définies de déformation de l'éprouvette, un dispositif (10) de réglage en longueur qui agit selon la direction de la force exercée sur l'éprouvette et par lequel le second dispositif (15) de bridage de l'éprouvette est porté, avec possibilité de déplacement selon la direction de la force exercée sur l'éprouvette, à l'extrémité du dispositif (11) du circuit auxiliaire de la force opposée au premier dispositif de bridage de l'éprouvette et est relié au second dispositif (13) d'application de la force, étant précisé que sont prévus des moyens (22, 23) grâce auxquels, selon chaque fois la résistance de l'éprouvette (9) à la déformation, une partie, agissant comme force exercée sur l'éprouvette, de la force d'entraînement qui passait par le circuit auxiliaire (11) de la force est automatiquement dérivée et mesurée par le premier dispositif (16) de mesure de la force,
qu'un dispositif de commande (18), relié au dispositif d'entraînement (17), collabore avec le second dispositif (19) de mesure de la force pour régler à une valeur constante, prescrite, la force d'entraînement que doit exercer le dispositif d'entraînement (17) pendant le processus d'essai.

2. Machine d'essai selon la revendication 1, caractérisée par le fait que la force d'entraînement est une force de compression ou une force de traction et que le dispositif (11) de circuit auxiliaire de la force est conçu sous forme d'un cadre, d'un boisseau ou d'une cage.

3. Machine d'essai selon l'une des revendications précédentes, caractérisée par le fait que le dispositif (10) de réglage en longueur est conçu sous forme d'un écrou (20), porté sur le dispositif (11) du circuit auxiliaire de la force, avec vis associée (21).

4. Machine d'essai selon la revendication 3, caractérisée par le fait qu'est prévu sur le dispositif (11) de circuit auxiliaire de la force un moteur réglant (22) relié à l'écrou (20).

5. Machine d'essai selon la revendication 3 à 4, caractérisée par le fait que l'écrou (20) et le moteur réglant associé (22) sont disposés, pour les essais de traction, à l'intérieur du dispositif (11) de circuit auxiliaire de la force et, pour les essais de compression, à l'extérieur de ce dispositif.

6. Machine d'essai selon l'une des revendications 1 ou 2, caractérisée par le fait que le dispositif (10) de réglage en longueur est conçu sous forme d'un système hydraulique (33) avec cylindre hydraulique (34) et piston (35), le dispositif (10) de réglage en longueur reliant le cylindre hydraulique (34) au second dispositif (13) d'application de la force.

7. Machine d'essai selon la revendication 6, caractérisée par le fait qu'une vanne (37), qui peut se commander, avec réservoir basse pression (38) qui lui est relié, est disposée sur le système hydraulique (33) près du cylindre hydraulique (34).

8. Machine d'essai selon la revendication 1, caractérisée par le fait que les dispositifs (12, 13) d'application de la force sont prévus avec une section cylindrique ou rectangulaire de façon à pouvoir être bridés dans les dispositifs de bridage de l'éprouvette d'une machine d'essai traditionnelle, les dispositifs de bridage de l'éprouvette formant les zones (42, 43) d'application de la force.

9. Machine d'essai selon l'une des revendications précédentes, caractérisée par le fait que pour des essais de compression ou de traction, au moins l'un des dispositifs (12, 13) d'application de la force est porté sans qu'un moment y soit exercé.

10. Machine d'essai selon l'une des revendications précédentes, caractérisée par le fait qu'entre le dispositif d'entraînement (17) et le second dispositif (13) d'application de la force est disposé un ressort (41) pour accumuler de l'énergie d'entraînement.

11. Machine d'essai pour l'essai mécanique des éprouvettes de matériaux, en particulier pour essais de torsion, constituée de
un premier et un second dispositifs (12, 13) d'application du moment,
un dispositif d'entraînement (17), relié au second dispositif (13) d'application du moment, pour produire une source d'entraînement,
un dispositif supplémentaire (24) qui
est disposé entre le premier et le second dispositifs (12, 13) d'application du moment et présente un dispositif (11) de circuit auxiliaire du moment ainsi qu'un premier dispositif (16) de mesure du moment pour le moment exercé sur l'éprouvette et un premier et un second dispositifs (14, 15) de bridage de l'éprouvette de matériau, étant précisé que
le dispositif (11) de circuit auxiliaire du moment est relié au premier et au second dispositifs (12, 13) d'application du moment et transmet un moment partiel qui, depuis le second dispositif d'application du moment, agit sur le premier dispositif (12, 13) d'application du moment et shunte l'éprouvette de matériau (9) qui se trouve dans les deux dispositifs (14, 15) de bridage de l'éprouvette,
ainsi que d'un second dispositif (19) de mesure du moment pour mesurer le moment d'entraînement,
caractérisée par le fait
que dans le dispositif supplémentaire (24), le dispositif (11) de circuit auxiliaire du moment est conçu rigide,
qu'il est prévu, pour produire des angles définis de déformation de l'éprouvette, un dispositif (10) de réglage angulaire qui agit selon la direction du moment exercé sur l'éprouvette et par lequel le second dispositif (15) de bridage de l'éprouvette est porté, avec possibilité de déplacement selon la direction du moment exercé sur l'éprouvette, à l'extrémité du dispositif (11) du circuit auxiliaire du moment opposée au premier dispositif de bridage de l'éprouvette et est relié au second dispositif (13) d'application du moment, étant précisé que sont prévus des moyens (22, 23) grâce auxquels, selon chaque fois la résistance de l'éprouvette (9) à la déformation, une partie, agissant comme moment exercé sur l'éprouvette, du moment d'entraînement qui passait par le circuit auxiliaire (11) du moment est automatiquement dérivée et mesurée par le premier dispositif (16) de mesure de la force,
qu'un dispositif de commande (18), relié au dispositif d'entraînement (17), collabore avec le second dispositif (19) de mesure du moment pour régler à une valeur constante, prescrite, le moment d'entraînement que doit exercer le dispositif d'entraînement (17) pendant le processus d'essai.

12. Procédé pour l'essai mécanique d'éprouvettes de matériau et de composant à l'aide d'une machine d'essai selon la revendication 1, caractérisé par les pas de procédé suivants:
a) l'éprouvette (9) n'étant pas encore contrainte, on précontraint. selon l'indication d'un second dispositif (19) de mesure de la force, qui enregistre la force de la machine, l'ensemble de la machine d'essai, au moyen du mécanisme d'entraînement et par l'intermédiaire du circuit auxiliaire (11) de la force, à une valeur constante qui est supérieure à une charge maximale nécessaire pour l'essai de l'éprouvette ou qui correspond à une valeur limite fixée qui ne doit pas être dépassée pendant le processus d'essai, mais grâce au maintien constant de laquelle pendant le processus d'essai, dans chaque cas, toutes les influences nuisibles, fonctions de la force, de la machine d'essai sont, de par le principe même, éliminées.
b) l'éprouvette (9) est définie et directement déformée par un déplacement dosé d'un dispositif (10) de réglage en longueur selon la direction de la force d'entraînement qui intervient (force de la machine), étant précisé que
en fonction de la résistance de l'éprouvette (9) à la déformation, le flux de force se déplace en partie pour passer du circuit auxiliaire (11) de la force sur l'éprouvette (9) et sur le premier dispositif de mesure de la force (16), tandis que le dispositif d'entraînement (17) ajuste, avec une force d'entraînement constante, la course de déformation de l'éprouvette (9) prescrite en tant que course de déplacement du dispositif (10) de réglage en longueur et fournit ainsi le travail nécessaire de déformation de l'éprouvette et
lors de la disparition de la résistance de l'éprouvette (9) de la déformation, le flux de force repasse à nouveau, de façon correspondante, dans le circuit auxiliaire (11) de la force et, lors de la rupture de l'éprouvette, est finalement à nouveau entièrement repris par ce circuit auxiliaire.
c) la décharge de contrainte de la machine d'essai se fait une fois terminé le processus d'essai.
